# EUROPÄISCHE PATENTANMELDUNG

(11) **EP 4 725 733 A1**
(43) Veröffentlichungstag der Anmeldung: **15.04.2026**
(21) Anmeldenummer: 25207443.0
(22) Anmeldetag: 08.10.2025
(51) Int. Cl.: B60K 1/04

(54) **ELEKTRIFIZIERTES NUTZFAHRZEUQ, ELEKTRIFIZIERTER NUTZFAHRZEUQANHÄNQER UND VERFAHREN ZUM ERHÖHEN EINER BETRIEBSSICHERHEIT**

(30) Priorität: 14.10.2024 DE 102024129670
(71) Anmelder: ZF CV Systems Global GmbH, 3006 Bern (CH)
(72) Erfinder: Gerlach, Steffen, 30169 Hannover (DE); Meurer, Bernd, 48268 Greven (DE)
(74) Vertreter: Ohlendorf, Henrike

(57) **Zusammenfassung**

Ein elektrifizierter Nutzfahrzeuganhänger (10), ein elektrifiziertes Nutzfahrzeug und ein Verfahren werden bereitgestellt, die eingerichtet sind, eine Betriebssicherheit des elektrifizierten Nutzfahrzeuganhängers (10) oder des elektrifizierten Nutzfahrzeugs zu erhöhen. Der elektrifizierte Nutzfahrzeuganhänger (10) oder das elektrifizierte Nutzfahrzeug weist einen elektrischen Achsantrieb (12) und eine Batterie (18) auf, die zum Versorgen des elektrischen Achsantriebs (12) mit Energie eingerichtet ist. Der elektrifizierte Nutzfahrzeuganhänger (10) oder das elektrifizierte Nutzfahrzeug weist eine Brandbegrenzungseinrichtung (23) auf, die ein Brandbegrenzungsmaterial (23) aufweist und eingerichtet ist, eine Flammenausbreitung und/oder einer Hitzeausbreitung von der Batterie (18) zu hemmen.

## Beschreibung

Die Erfindung betrifft einen elektrifizierten Nutzfahrzeuganhänger, ein elektrifiziertes Nutzfahrzeug und ein Verfahren zum Erhöhen einer Betriebssicherheit eines elektrifizierten Nutzfahrzeuganhängers oder eines elektrifizierten Nutzfahrzeugs.

Eine Reduzierung von Treibhausemissionen zur Eindämmung voranschreitender Klimaveränderungen ist eine wichtige Herausforderung, die zahlreiche Technologiefelder beeinflusst. Im Gebiet der Automobiltechnik werden mit zunehmend emissionsarm gewonnener elektrischer Energie Elektroantriebe zunehmend attraktiver, um Treibhausemissionen zu verringern. Auch für Nutzfahrzeuge werden Elektroantriebe zunehmend attraktiver. Beispielsweise können Diesel-Lastkraftwagen zum Hybridfahrzeug erweitert werden. Sattelfahrzeuge können einen zusätzlichen Antrieb erhalten. Bei einem elektrifizierten Nutzfahrzeuganhänger kann ein elektrischer Achsantrieb sowie ein Batteriesystem in den Nutzfahrzeuganhänger integriert sein. So kann Bremsenergie rekuperiert werden. Die gewonnene elektrische Energie kann bei der Traktion unterstützen und entlastet dadurch den Lastkraftwagen-Antrieb. Bei rein elektrisch angetriebenen Lastkraftfahrzeugen kann ein elektrifizierter Nutzfahrzeuganhänger einen zusätzlichen elektrischen Antrieb bereitstellen und zu einer Reichweitenverlängerung beitragen.

Die DE 10 2021 127653 A1 und die WO 2023/072496 A1 offenbaren jeweils ein Anhängerfahrzeug mit einem elektrischen Antrieb.

Die Betriebssicherheit stellt bei elektrifizierten Nutzfahrzeuganhängern und elektrifizierten Nutzfahrzeugen eine besondere Herausforderung dar. Aus bautechnischen Gründen kann es beispielsweise bei herkömmlichen elektrifizierten Nutzfahrzeuganhängern schwierig sein, eine unerwünschte Hitzeentwicklung einer zur Energieversorgung des Elektroantriebs vorgesehenen Batterie einzudämmen und/oder einen Ladebereich des elektrifizierten Nutzfahrzeuganhängers oder des elektrifizierten Nutzfahrzeugs vor einem Übergreifen eines Brands zu schützen. Gründe hierfür sind die in derartigen Batterien enthaltenen Materialien, die bei Überhitzung oder mechanischem Stress in Brand geraten oder explodieren können, was die Brandbekämpfung erschweren kann. Bei einer Überhitzung kann es zu einem thermischen Durchgehen einer Batteriezelle der Batterie kommen, bei dem eine Kettenreaktion von Wärme und Gasfreisetzung eintritt. Dies kann dazu führen, dass auch Nachbarzellen versagen und in Brand geraten, wodurch sich ein Feuer schnell ausbreiten kann. Im Falle eines Brandes oder bei Hitzeentwicklung können die Batterien oft schwer zugänglich sein, insbesondere aufgrund baulicher Gegebenheiten von elektrifizierten Nutzfahrzeuganhängern oder elektrifizierten Nutzfahrzeugen. Dies kann es für Feuerwehrleute oder andere Rettungskräfte schwieriger machen, Brände oder andere kritische Situationen sicher und effektiv zu bekämpfen.

Es besteht weiterhin ein Bedarf an elektrifizierten Nutzfahrzeuganhängern, elektrifizierten Nutzfahrzeugen und Verfahren, die Verbesserungen im Hinblick auf die Betriebssicherheit bieten.

Aufgabe der Erfindung ist es, einen verbesserten elektrifizierten Nutzfahrzeuganhänger, ein verbessertes elektrifiziertes Nutzfahrzeug und ein Verfahren bereitzustellen, der oder das Vorteile im Hinblick auf die Betriebssicherheit bietet. Insbesondere ist es Aufgabe der Erfindung, Verbesserungen für einen elektrifizierten Nutzfahrzeuganhänger oder ein elektrifiziertes Nutzfahrzeug bereitzustellen, mit denen die aufgrund baulicher Gegebenheiten des elektrifizierten Nutzfahrzeuganhängers oder des elektrifizierten Nutzfahrzeugs herausfordernde Eindämmung einer Brand- und/oder Hitzeausbreitung verbessert wird.

Die Aufgabe wird gelöst durch einen elektrifizierten Nutzfahrzeuganhänger, ein elektrifiziertes Nutzfahrzeug und ein Verfahren, wie sie in den unabhängigen Ansprüchen angegeben sind. Erfindungsgemäß werden auch ein Brandbegrenzungselement und eine Batterieeinheit bereitgestellt, wie sie in dieser Anmeldung offenbart sind. Die abhängigen Ansprüche definieren vorteilhafte Ausführungsformen.

Nach einem Aspekt der Erfindung wird ein elektrifizierter Nutzfahrzeuganhänger oder ein elektrifiziertes Nutzfahrzeug bereitgestellt. Der elektrifizierte Nutzfahrzeuganhänger oder das elektrifizierte Nutzfahrzeug weist einen Ladeboden, einen elektrischen Achsantrieb, eine Batterie zum Versorgen des elektrischen Achsantriebs mit Energie und eine Abstützeinrichtung, die eingerichtet ist, die Batterie unterhalb des Ladebodens mechanisch abzustützen, auf. Der elektrifizierte Nutzfahrzeuganhänger oder das elektrifizierte Nutzfahrzeug weist ferner eine Brandbegrenzungseinrichtung auf. Die Brandbegrenzungseinrichtung weist ein Brandbegrenzungsmaterial auf. Die Brandbegrenzungseinrichtung ist eingerichtet, eine Hemmung einer Flammenausbreitung und/oder einer Hitzeausbreitung von der Batterie zu bewirken oder zu unterstützen.

Durch den elektrifizierten Nutzfahrzeuganhänger oder das elektrifizierte Nutzfahrzeug werden verschiedene technische Vorteile und Wirkungen erzielt. Die Integration des elektrischen Achsantriebs und der Batterie in den elektrifizierten Nutzfahrzeuganhänger oder das elektrifizierte Nutzfahrzeug ermöglicht die Bereitstellung von Traktion durch den elektrischen Achsantrieb. Darüber hinaus ist eine Rekuperation möglich, wodurch die Energieeffizienz verbessert wird. Durch die Brandbegrenzungseinrichtung des elektrifizierten Nutzfahrzeuganhängers oder des elektrifizierten Nutzfahrzeugs wird die Sicherheit im Falle eines thermischen Durchgehens, das zu einer Gasfreisetzung führen kann, und/oder eines Brands erhöht. Die Integration von Mitteln, mit denen die Flammenausbreitung und/oder die Hitzeausbreitung von der Batterie beispielsweise in Richtung des Ladebodens gehemmt wird oder mit denen eine derartige Hemmung unterstützt wird, führen zu einem wertvollen Zeitgewinn, mit dem das Risiko schwer kontrollierbarer Situationen signifikant verringert werden kann. Dies ist insbesondere bei der für elektrifizierte Nutzfahrzeuganhänger erforderlichen Auslegung von Batterien (beispielsweise mit einer Ausgestaltung, die eine Speicherung von mehr als 250 kWh, mehr als 500 kWh, mehr als 750 kWh oder mehr als 1000 kWh Energie ermöglicht) und im Hinblick auf die typischen baulichen Gegebenheiten, die einen Zugang zur Batterie im in den Nutzfahrzeuganhänger oder im Nutzfahrzeug verbauten Zustand erschweren können, relevant. Durch die Bereitstellung der Brandbegrenzungseinrichtung als von der Abstützeinrichtung verschiedene, zusätzliche Komponente kann die Abstützeinrichtung im Hinblick auf ihre mechanische Funktion und die Brandbegrenzungseinrichtung im Hinblick auf ihre Funktion der Hemmung einer Flammenausbreitung und/oder Hitzeausbreitung konfiguriert sein. Es ist insbesondere nicht erforderlich, die Brandbegrenzungseinrichtung so auszugestalten, dass sie eine mechanische Tragefunktion für die Batterie ausführen kann.

Vorteilhaft kann sich wenigstens ein Teil des Brandbegrenzungsmaterials zwischen der Batterie und dem Ladeboden erstrecken.

Dadurch kann eine Flammenausbreitung und/oder Hitzeausbreitung von der Batterie in Richtung des Ladebodens gehemmt werden. Das Risiko einer schwer kontrollierbaren Ausbreitung eines Brands zum Ladeboden kann dadurch verringert werden. Aufgrund der baulichen Gegebenheiten des elektrifizierten Nutzfahrzeuganhängers oder des elektrifizierten Nutzfahrzeugs ist es bei elektrifizierten Nutzfahrzeuganhängern oder elektrifizierten Nutzfahrzeugen herausfordernd, das Risiko einer schwer kontrollierbaren Ausbreitung eines Brands zum Ladeboden in einer für Rettungskräfte gefahrenarmen Weise zu reduzieren. Die Integration des Brandbegrenzungsmaterials, von dem sich wenigstens ein Teil zwischen der Batterie und dem Ladeboden erstreckt, in den elektrifizierten Nutzfahrzeuganhänger oder das elektrifizierte Nutzfahrzeug adressiert dieses Problem. Dadurch kann die Betriebssicherheit weiter verbessert werden.

Vorteilhaft kann das Brandbegrenzungsmaterial derart angeordnet sein, dass sich der sich zwischen der Batterie und dem Ladeboden erstreckende Teil des Brandbegrenzungsmaterials kontinuierlich entlang einer Ebene des Ladebodens erstreckt, oder kann das Brandbegrenzungsmaterial derart angeordnet sein, dass es die Batterie an einer in Richtung zum Ladeboden weisenden Batterieseite vollständig überdeckt.

Dadurch kann eine Flammenausbreitung und/oder Hitzeausbreitung von der Batterie in Richtung des Ladebodens wirksam gehemmt werden. Das Risiko einer schwer kontrollierbaren Ausbreitung eines Brands zum Ladeboden kann effizient reduziert werden, wobei den besonderen baulichen Gegebenheiten des elektrifizierten Nutzfahrzeuganhängers oder des elektrifizierten Nutzfahrzeugs Rechnung getragen wird. Dadurch kann die Betriebssicherheit des elektrifizierten Nutzfahrzeuganhängers oder des elektrifizierten Nutzfahrzeugs weiter verbessert werden.

Vorteilhaft kann der elektrifizierte Nutzfahrzeuganhänger oder das elektrifizierte Nutzfahrzeug so ausgestaltet sein, dass der sich zwischen der Batterie und dem Ladeboden erstreckende Teil des Brandbegrenzungsmaterials ohne Demontage der Batterie nicht zerstörungsfrei von dem elektrifizierten Nutzfahrzeuganhänger oder dem elektrifizierten Nutzfahrzeug entfernbar ist.

Dadurch kann der sich zwischen der Batterie und dem Ladeboden erstreckende Teil des Brandbegrenzungsmaterials eine wirksame Hemmung von Hitze- und/oder Flammenausbreitung in einem Bereich des elektrifizierten Nutzfahrzeuganhängers oder des elektrifizierten Nutzfahrzeugs bereitstellen, der ohne eine im Brandfall potenziell gefährliche Demontage der Batterie nicht gefahrenarm zugänglich ist. Dadurch kann die Betriebssicherheit weiter verbessert werden.

Vorteilhaft kann das Brandbegrenzungsmaterial derart angeordnet sein, dass es die Batterie an mehreren weiteren Batterieseiten, die von der zum Ladeboden weisenden Batterieseite beabstandet sind und/oder sich quer zur Ebene des Ladebodens erstrecken, wenigstens teilweise überdeckt.

Dadurch kann das Risiko eine Flammenausbreitung und/oder Hitzeausbreitung von der Batterie auch in Raumrichtungen gehemmt werden, die nicht zum Ladeboden hin weisen. Das Risiko einer schwer kontrollierbaren Ausbreitung eines Brands kann effizient reduziert werden. Dadurch kann die Betriebssicherheit weiter verbessert werden.

Vorteilhaft kann der elektrifizierte Nutzfahrzeuganhänger oder das elektrifizierte Nutzfahrzeug ein Fixiermittel aufweisen, das das Brandbegrenzungsmaterial relativ zur Batterie und/oder relativ zum Ladeboden fixiert.

Dadurch kann das Brandbegrenzungsmaterial so gesichert werden, dass es auch im Betrieb des elektrifizierten Nutzfahrzeuganhängers oder des elektrifizierten Nutzfahrzeugs wirksam seine Soll-Funktion der Hemmung einer Flammenausbreitung und/oder Hitzeausbreitung ausüben kann. Das Risiko einer unerwünschten Verschiebung des Brandbegrenzungsmaterials wird verringert. Das Brandbegrenzungsmaterial wird in seiner Soll-Position gesichert. Dadurch kann die Betriebssicherheit weiter verbessert werden.

Vorteilhaft kann das Fixiermittel eine Fixierschicht aufweisen, die das Brandbegrenzungsmaterial relativ zur Batterie und/oder relativ zum Ladeboden flächig fixiert. Die Fixierschicht kann an einer Abdeckung einer die Batterie aufweisenden Batterieeinheit und/oder am Ladeboden unmittelbar flächig anliegen.

Dadurch kann das Brandbegrenzungsmaterial so gesichert werden, dass es auch im Betrieb des elektrifizierten Nutzfahrzeuganhängers oder des elektrifizierten Nutzfahrzeugs wirksam seine Soll-Funktion der Hemmung einer Flammenausbreitung und/oder Hitzeausbreitung ausüben kann. Ein Risiko einer unerwünschten Verschiebung des Brandbegrenzungsmaterials wird verringert.

Vorteilhaft kann das Fixiermittel mehrere Fixierelemente aufweisen, die das Brandbegrenzungsmaterial relativ zur Batterie und/oder relativ zum Ladeboden fixieren.

Dadurch kann das Brandbegrenzungsmaterial mit geringem Installationsaufwand so gesichert werden, dass es auch im Betrieb des elektrifizierten Nutzfahrzeuganhängers oder des elektrifizierten Nutzfahrzeugs wirksam seine Soll-Funktion der Hemmung einer Flammenausbreitung und/oder Hitzeausbreitung ausüben kann.

Vorteilhaft kann der elektrifizierte Nutzfahrzeuganhänger oder das elektrifizierte Nutzfahrzeug eine Batterieeinheit aufweisen, die die Batterie, wenigstens einen Teil des Brandbegrenzungsmaterials und ein Batteriemanagementsystem aufweist.

Dadurch können die Batterie und das Brandbegrenzungsmaterial in effizienter Weise in den elektrifizierten Nutzfahrzeuganhänger oder das elektrifizierte Nutzfahrzeug integriert werden. Der elektrifizierte Nutzfahrzeuganhänger oder das elektrifizierte Nutzfahrzeug kann die Batterieeinheit als modular installierbare Komponente aufweisen, wodurch eine Fehleranfälligkeit bei einer Montage reduziert und durch das integrierte Brandbegrenzungsmaterial eine verbesserte Sicherheit bereitgestellt wird. Dadurch kann die Betriebssicherheit weiter verbessert werden.

Vorteilhaft kann die Batterieeinheit eine Abdeckung aufweisen, die eingerichtet ist, die Batterie gegen externe Einwirkung (beispielsweise Spritzwasser, Auftreffen von Steinen, Staub etc.) wenigstens teilweise abzuschirmen. Der in die Batterieeinheit integrierte Teil des Brandbegrenzungsmaterials kann sich innerhalb eines durch die Abdeckung definierten Volumens zwischen der Batterie und der Abdeckung erstrecken.

Dadurch kann eine wirksame Hemmung von Hitze- und/oder Flammenausbreitung bewirkt werden, die ein sicheres Arbeiten in einer Umgebung der Abdeckung durch Rettungspersonal ermöglicht.

Vorteilhaft kann die Abdeckung eine zum Ladeboden hin weisende Wand aufweisen, wobei sich der in die Batterieeinheit integrierte Teil des Brandbegrenzungsmaterials wenigstens zwischen der Batterie und der zum Ladeboden hin weisenden Wand der Abdeckung erstreckt.

Dadurch kann eine wirksame Hemmung von Hitze- und/oder Flammenausbreitung in Richtung des Ladebodens bewirkt werden.

Vorteilhaft kann die Abdeckung eine oder mehrere Außenseiten aufweisen, die sich quer zu der Wand der Abdeckung erstrecken, die zum Ladeboden hin weist. Alternativ oder zusätzlich kann die Abdeckung eine Bodenfläche aufweisen, die sich im Wesentlichen entlang einer Ladebodenebene des Ladebodens erstreckt, wobei die Batterie und der Ladeboden auf einer selben Seite relativ zur Bodenfläche der Abdeckung angeordnet sind. Das innerhalb der Abdeckung angeordnete Brandbegrenzungsmaterial kann eine oder mehrere der Außenseiten und/oder die Bodenfläche flächig bedecken, so dass es sich zwischen der Batterie und den Außenseiten und/oder zwischen der Batterie und der Bodenfläche erstreckt.

Dadurch kann eine wirksame Hemmung von Hitze- und/oder Flammenausbreitung bewirkt werden, die ein gefahrenarmes Arbeiten von Rettungspersonen in einer Umgebung der Abdeckung erleichtert.

Vorteilhaft kann der in die Batterieeinheit integrierte Teil des Brandbegrenzungsmaterials von der Abdeckung kraftschlüssig, insbesondere reibschlüssig, an der Batterie gehalten werden.

Dadurch wird das Brandbegrenzungsmaterial wirksam in seiner Position gesichert, um eine Hemmung von Hitze- und/oder Flammenausbreitung im Nutzbetrieb sicherzustellen.

Vorteilhaft kann das Brandbegrenzungsmaterial einlagig oder mehrlagig um die Batterie gewickelt sein.

Dadurch stellt das Brandbegrenzungsmaterial eine besonders wirksame Hemmung von Hitze- und/oder Flammenausbreitung im Nutzbetrieb sicher, die zu einem gefahrenarmen Arbeiten durch Rettungspersonen beiträgt.

Vorteilhaft kann das Brandbegrenzungsmaterial Durchführungen für elektrische Leiter aufweisen oder definieren, über die bei einer Rekuperation der Batterie Energie zugeführt wird und/oder über die die Batterie den Achsantrieb mit Energie versorgt. Die Durchführungen können so dimensioniert sein, dass das Brandbegrenzungsmaterial an wenigstens einem der elektrischen Leiter anliegt (beispielsweise satt anliegt).

Dadurch stellt das Brandbegrenzungsmaterial eine besonders wirksame Hemmung von Hitze- und/oder Flammenausbreitung im Nutzbetrieb sicher, die zu einem gefahrenarmen Arbeiten durch Rettungspersonen beiträgt.

Vorteilhaft kann die Brandbegrenzungseinrichtung eine Befestigungseinrichtung zum Befestigen eines Brandbegrenzungselements, das wenigstens einen weiteren Teil des Brandbegrenzungsmaterials aufweist, aufweisen.

Dadurch kann die Anbringung des Brandbegrenzungselements am elektrifizierten Nutzfahrzeuganhänger oder am elektrifizierten Nutzfahrzeug im Fall einer drohenden oder bereits vorhandenen Hitze- und/oder Flammenentwicklung erleichtert werden. Dies trägt zu einer weiteren Verbesserung der Betriebssicherheit bei.

Vorteilhaft kann die Befestigungseinrichtung zum reversibel lösbaren Befestigen, beispielsweise durch Einhaken des Brandbegrenzungselements, durch einen Formschluss oder auf andere Weise, eingerichtet sein.

Dadurch kann die Anbringung des Brandbegrenzungselements am elektrifizierten Nutzfahrzeuganhänger oder am elektrifizierten Nutzfahrzeug im Fall einer drohenden oder bereits vorhandenen Hitze- und/oder Flammenentwicklung erleichtert werden. Dies trägt zu einer weiteren Verbesserung der Betriebssicherheit bei.

Vorteilhaft kann die Befestigungseinrichtung eingerichtet sein, das Brandbegrenzungselement in Anlage an einer Komponente des elektrifizierten Nutzfahrzeuganhängers oder des elektrifizierten Nutzfahrzeugs zu befestigen.

Dadurch kann das Risiko eines Flammenaustritts reduziert werden. Dies trägt zu einer weiteren Verbesserung der Betriebssicherheit bei.

Vorteilhaft kann die Befestigungseinrichtung eingerichtet sein, das Brandbegrenzungselement so zu befestigen, dass sich das Brandbegrenzungselement teilweise oder vollständig um die Batterie erstreckt.

Dadurch kann das Risiko eines Flammenaustritts reduziert werden. Dies trägt zu einer weiteren Verbesserung der Betriebssicherheit bei.

Vorteilhaft kann die Befestigungseinrichtung eingerichtet sein, das Brandbegrenzungselement so zu befestigen, dass sich das Brandbegrenzungselement teilweise oder vollständig um die Batterie und den Ladeboden erstreckt.

Dadurch kann das Risiko für Rettungspersonal besonders wirksam reduziert werden. Dies trägt zu einer weiteren Verbesserung der Betriebssicherheit bei.

Vorteilhaft kann die Befestigungseinrichtung mehrere Befestigerelemente aufweisen, die jeweils für einen Eingriff mit einem Verbinder des Brandbegrenzungselements eingerichtet sind. Die Befestigungseinrichtung kann ein Befestigerelement und ein weiteres Befestigerelement aufweisen, die an transversal zu einer Längsrichtung des elektrifizierten Nutzfahrzeuganhängers oder des elektrifizierten Nutzfahrzeugs voneinander beabstandeten Seiten des elektrifizierten Nutzfahrzeuganhängers oder des elektrifizierten Nutzfahrzeugs vorgesehen sind.

Dadurch kann eine effiziente Befestigung des Brandbegrenzungselements erleichtert werden. Dies trägt zu einer weiteren Verbesserung der Betriebssicherheit bei.

Das Brandbegrenzungselement kann als Brandbegrenzungsdecke ausgebildet sein oder kann eine Brandbegrenzungsdecke aufweisen, die Verbindungselemente zur lösbaren Verbindung mit der Befestigungseinrichtung aufweisen kann.

Dadurch ist das Brandbegrenzungselement in flexibler Weise so am elektrifizierten Nutzfahrzeuganhänger oder am elektrifizierten Nutzfahrzeug anbringbar, dass das Risiko eines Flammenaustritts reduziert werden kann. Dies trägt zu einer weiteren Verbesserung der Betriebssicherheit bei.

Vorteilhaft kann die Befestigungseinrichtung beabstandet von der Batterie angeordnet sein.

Dadurch ermöglicht der elektrifizierte Nutzfahrzeuganhänger oder das elektrifizierte Nutzfahrzeug eine Befestigung des Brandbegrenzungselements in einer für Rettungskräfte gefahrenarmen Weise. Dies trägt zu einer weiteren Verbesserung der Betriebssicherheit bei.

Vorteilhaft kann die Befestigungseinrichtung als Schnellverbinder für eine Kopplung mit korrespondierenden Verbindern des Brandbegrenzungselements eingerichtet sein.

Dadurch ermöglicht der elektrifizierte Nutzfahrzeuganhänger oder das elektrifizierte Nutzfahrzeug eine Befestigung des Brandbegrenzungselements in einer für Rettungskräfte gefahrenarmen Weise. Dies trägt zu einer weiteren Verbesserung der Betriebssicherheit bei.

Vorteilhaft kann das Brandbegrenzungsmaterial ein flexibles Brandbegrenzungsmaterial aufweisen.

Dadurch ist eine Anordnung des Brandbegrenzungsmaterials derart, dass es die Batterie wenigstens teilweise umgibt und zu einer Hemmung einer Hitze- und/oder Flammenausbreitung beiträgt, in einfacher Weise realisierbar. Dies trägt zu einer weiteren Verbesserung der Betriebssicherheit bei.

Vorteilhaft kann das flexible Brandbegrenzungsmaterial Siliziumoxid-Fasern und/oder Glasfasern mit einer Siliziumbeschichtung aufweisen.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierten Nutzfahrzeugen nutzbaren Kapazitäten entstehen können. Dies trägt zu einer weiteren Verbesserung der Betriebssicherheit bei.

Vorteilhaft kann das flexible Brandbegrenzungsmaterial ein Gewebe und/oder ein Vlies aufweisen.

Dadurch ist eine Anordnung des Brandbegrenzungsmaterials derart, dass es die Batterie wenigstens teilweise umgibt und zu einer Hemmung einer Hitze- und/oder Flammenausbreitung beiträgt, in einfacher Weise realisierbar. Dies trägt zu einer weiteren Verbesserung der Betriebssicherheit bei.

Das Brandbegrenzungsmaterial kann beispielsweise eines, mehrere oder alle der folgenden Gewebe aufweisen: ein Glasfasergewebe, ein Glasfasergewebe mit einer Beschichtung (beispielsweise mit einer siliziumhaltigen Beschichtung und/oder einer Silizium-Beschichtung), ein Siliziumoxid-Faser-Gewebe und/oder ein Kompositgewebe (beispielsweise aus Aramidfasern und Glasfasern).

Dadurch kann das Brandbegrenzungsmaterial Temperaturen standhalten, wie sie beispielsweise bei thermischem Durchgehen oder Bränden von Lithium-Ionen-Batterien im Nutzfahrzeugbereich entstehen können, wobei zusätzlich eine Wasser- und Ölbeständigkeit des Gewebes bereitgestellt wird, die dieses besonders geeignet für einen Einsatz an einem elektrifizierten Nutzfahrzeug oder einem elektrifizierten Nutzfahrzeuganhänger macht.

Vorteilhaft kann das Brandbegrenzungsmaterial eines, mehrere oder alle der folgenden Vliese aufweisen: ein Glasfaser-Vlies, ein hochtemperaturbeständiges Vlies, ein Siliziumoxid-Faser-Vlies und/oder ein Vlies mit einer siliziumhaltigen Beschichtung.

Dadurch kann das Brandbegrenzungsmaterial Temperaturen standhalten, wie sie beispielsweise bei thermischem Durchgehen oder Bränden von Lithium-Ionen-Batterien im Nutzfahrzeugbereich entstehen können, wobei zusätzlich eine Wasser- und Ölbeständigkeit des Vlieses bereitgestellt wird, die dieses besonders geeignet für einen Einsatz an einem elektrifizierten Nutzfahrzeug oder einem elektrifizierten Nutzfahrzeuganhänger macht.

Vorteilhaft kann das Brandbegrenzungsmaterial ausgestaltet sein, Temperaturen von 1000 °C oder mehr, von 1200 °C oder mehr oder von 1300 °C oder mehr zerstörungsfrei standzuhalten.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierte Nutzfahrzeuge nutzbaren Kapazitäten entstehen können. Dies trägt zu einer weiteren Verbesserung der Betriebssicherheit bei.

Vorteilhaft kann der elektrifizierte Nutzfahrzeuganhänger als elektrifizierter Sattelauflieger ausgestaltet sein.

Dadurch kann die Betriebssicherheit für den elektrifizierten Sattelauflieger erhöht werden, bei dem es aufgrund baulicher Gegebenheiten, insbesondere im Hinblick auf die Anordnung der Batterie, besonders herausfordernd ist, eine Hitze- und/oder Flammenausbreitung bei einem Batteriebrand oder bei thermischem Durchgehen der Batterie zu begrenzen.

Nach einem weiteren Aspekt der Erfindung wird ein Brandbegrenzungselement bereitgestellt, das ein Brandbegrenzungsmaterial aufweist und zur reversibel lösbaren Befestigung an einem elektrifizierten Nutzfahrzeuganhänger oder einem Nutzfahrzeug eingerichtet ist.

Durch das Brandbegrenzungselement werden verschiedene technische Vorteile und Wirkungen erzielt. Das Brandbegrenzungselement ist im Brandfall selektiv mit einer korrespondierenden Befestigungseinrichtung des elektrifizierten Nutzfahrzeuganhängers oder des elektrifizierten Nutzfahrzeugs koppelbar, um bei der Hemmung einer Hitze- und/oder Flammenausbreitung mitzuwirken.

Optionale Merkmale des Brandbegrenzungselements und die dadurch jeweils erzielten Wirkungen entsprechen den unter Bezugnahme auf den elektrifizierten Nutzfahrzeuganhänger oder das elektrifizierte Nutzfahrzeug beschriebenen optionalen Merkmalen und Wirkungen.

Vorteilhaft kann das Brandbegrenzungselement ein Stützelement aufweisen, beispielsweise einen Stützrahmen, der ein oder mehrere Gelenke aufweist.

Dadurch kann eine einfache Kopplung mit dem elektrifizierten Nutzfahrzeuganhänger oder dem elektrifizierten Nutzfahrzeug realisiert werden, wobei das Stützelement das Brandbegrenzungsmaterial in einer zur Hemmung der Hitze- und/oder Flammenausbreitung geeigneten Konfiguration halten kann.

Vorteilhaft kann das Brandbegrenzungselement eine erste Konfiguration und eine zweite Konfiguration aufweisen, wobei das Brandbegrenzungselement zur Kopplung mit dem elektrifizierten Nutzfahrzeuganhänger oder dem elektrifizierten Nutzfahrzeug in die zweite Konfiguration überführbar ist und in der ersten Konfiguration ein kleineres Volumen einnimmt als in der zweiten Konfiguration.

Dadurch kann das Brandbegrenzungselement in einem kompakten Volumen aufbewahrt und/oder transportiert werden und im Bedarfsfall in die zweite Konfiguration überführt werden.

Vorteilhaft kann das Brandbegrenzungselement eingerichtet sein, um in der zweiten Konfiguration formschlüssig und/oder kraftschlüssig relativ zur Batterie arretierbar zu sein.

Dadurch kann das Brandbegrenzungselement derart sicherbar sein, dass eine Hitze- und/oder Flammenausbreitung von der Batterie durch das Brandbegrenzungselement gehemmt wird. Dadurch trägt das Brandbegrenzungselement zur Betriebssicherheit bei.

Vorteilhaft kann das Brandbegrenzungselement derart eingerichtet sein, dass es in der zweiten Konfiguration eine Anlagefläche zur formschlüssigen oder kraftschlüssigen Anlage an einer Komponente des elektrifizierten Nutzfahrzeuganhängers oder des elektrifizierten Nutzfahrzeugs aufweist.

Dadurch kann das Brandbegrenzungselement gefahrenarm derart sicherbar sein, dass eine Hitze- und/oder Flammenausbreitung von der Batterie durch das Brandbegrenzungselement gehemmt wird. Dadurch trägt das Brandbegrenzungselement zur Betriebssicherheit bei.

Vorteilhaft kann das Stützelement eingerichtet sein, das Brandbegrenzungselement jeweils in der ersten Konfiguration und der zweiten Konfiguration zu halten. Dazu kann das Stützelement eine multistabile (beispielsweise bistabile) Konfiguration aufweisen, so dass selbst unter Einfluss des Erd-Gravitationsfelds das Brandbegrenzungselement jeweils stabil in der ersten Konfiguration und der zweiten Konfiguration verbleibt und nur unter einer externen Krafteinwirkung, die vom Erd-Gravitationsfeld verschieden ist, zwischen der ersten Konfiguration und der zweiten Konfiguration überführbar ist.

Dadurch kann das Brandbegrenzungselement in einem kompakten Volumen oder in einer anderweitig geeigneten Konfiguration aufbewahrt und/oder transportiert werden und im Bedarfsfall in einfacher Weise in die zweite Konfiguration überführt werden.

Vorteilhaft kann das Brandbegrenzungselement einen oder mehrere Verbinder aufweisen, die auf eine korrespondierende Befestigungseinrichtung des elektrifizierten Nutzfahrzeuganhängers oder des elektrifizierten Nutzfahrzeugs abgestimmt sind, um das Brandbegrenzungselement zerstörungsfrei reversibel lösbar an dem elektrifizierten Nutzfahrzeuganhänger zu befestigen.

Dadurch kann das Brandbegrenzungselement derart sicherbar sein, dass eine Hitze- und/oder Flammenausbreitung von der Batterie durch das Brandbegrenzungselement gehemmt wird. Dadurch trägt das Brandbegrenzungselement zur Betriebssicherheit bei.

Vorteilhaft kann das Brandbegrenzungsmaterial des Brandbegrenzungselements Siliziumoxid-Fasern und/oder Glasfasern mit einer Siliziumbeschichtung aufweisen.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierte Nutzfahrzeuge nutzbaren Kapazitäten entstehen können. Dies trägt zu einer weiteren Verbesserung der Betriebssicherheit bei.

Vorteilhaft kann das Brandbegrenzungsmaterial des Brandbegrenzungselements ein Gewebe und/oder ein Vlies aufweisen.

Dadurch ist eine Anordnung des Brandbegrenzungsmaterials derart, dass es die Batterie wenigstens teilweise umgibt und zu einer Hemmung einer Hitze- und/oder Flammenausbreitung beiträgt, in einfacher Weise realisierbar. Dies trägt zu einer weiteren Verbesserung der Betriebssicherheit bei.

Vorteilhaft kann das Brandbegrenzungsmaterial des Brandbegrenzungselements ausgestaltet sein, Temperaturen von 1000 °C oder mehr, von 1200 °C oder mehr oder von 1300 °C oder mehr zerstörungsfrei standzuhalten.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierte Nutzfahrzeuge nutzbaren Kapazitäten entstehen können. Dies trägt zu einer weiteren Verbesserung der Betriebssicherheit bei.

Vorteilhaft kann das Brandbegrenzungselement ein Brandbegrenzungselement für einen elektrifizierten Sattelauflieger sein.

Dadurch kann die Betriebssicherheit für den elektrifizierten Sattelauflieger erhöht werden, bei dem es aufgrund baulicher Gegebenheiten, insbesondere im Hinblick auf die Anordnung der Batterie, besonders herausfordernd ist, eine Hitze- und/oder Flammenausbreitung bei einem Batteriebrand oder bei thermischem Durchgehen der Batterie zu begrenzen.

Nach einem weiteren Aspekt der Erfindung wird eine Batterieeinheit für einen elektrifizierten Nutzfahrzeuganhänger oder ein elektrifiziertes Nutzfahrzeug bereitgestellt, wobei die Batterieeinheit eine Batterie, ein BatterieManagementsystem und ein Brandbegrenzungsmaterial aufweist, das eingerichtet ist, eine Hitzeausbreitung und/oder Flammenausbreitung von der Batterie zu hemmen.

Durch die Batterieeinheit werden verschiedene technische Vorteile und Wirkungen erzielt. Die Batterieeinheit weist das Brandbegrenzungsmaterial als integralen Bestandteil der Batterieeinheit auf. Dadurch kann das in die Batterieeinheit integrierte Brandbegrenzungsmaterial eine Hitze- und/oder Flammenausbreitung von der Batterie hemmen. Dies erhöht die Betriebssicherheit der Batterieeinheit bei Montage in einem elektrifizierten Nutzfahrzeuganhänger oder elektrifizierten Nutzfahrzeug.

Optionale Merkmale der Batterieeinheit und die dadurch jeweils erzielten Wirkungen entsprechen den unter Bezugnahme auf den elektrifizierten Nutzfahrzeuganhänger oder das elektrifizierte Nutzfahrzeug beschriebenen optionalen Merkmalen und Wirkungen.

Vorteilhaft kann die Batterieeinheit kann eine Abdeckung aufweisen, die die Batterie teilweise oder vollständig umgibt. Das Brandbegrenzungsmaterial kann sich entlang wenigstens einer in Richtung eines Ladebodens anzuordnenden Abdeckungswand der Abdeckung erstrecken, um eine Hitze- und/oder Flammenausbreitung von der Batterie hemmen.

Dadurch kann eine Hitze- und/oder Flammenausbreitung von der Batterie jedenfalls in Richtung eines Ladebodens wirksam gehemmt werden. Dies erhöht die Betriebssicherheit eines die Batterieeinheit aufweisenden elektrifizierten Nutzfahrzeuganhängers oder elektrifizierten Nutzfahrzeugs.

Vorteilhaft kann das Brandbegrenzungsmaterial innerhalb der Abdeckung angeordnet sein, so dass es sich jedenfalls zwischen der Batterie und der Abdeckungswand erstreckt.

Dadurch kann eine Hitze- und/oder Flammenausbreitung von der Batterie jedenfalls in Richtung eines Ladebodens wirksam gehemmt werden, wobei die Batterieeinheit mit dem darin integrierten Brandbegrenzungsmaterial in effizienter Weise installierbar ist. Dies erhöht die Betriebssicherheit eines die Batterieeinheit aufweisenden elektrifizierten Nutzfahrzeuganhängers oder elektrifizierten Nutzfahrzeugs.

Vorteilhaft kann die Batterieeinheit eine Abstützeinrichtung aufweisen, die eingerichtet ist, die Batterie in der Abdeckung unterhalb eines Ladebodens eines elektrifizierten Nutzfahrzeuganhängers oder elektrifizierten Nutzfahrzeugs mechanisch abzustützen.

Durch Realisierung der Funktionen der mechanischen Abstützung und der Brandbegrenzung in unterschiedlichen strukturellen Komponenten können die jeweiligen Komponenten (einerseits die Abstützeinrichtung, andererseits das Brandbegrenzungsmaterial) auf ihre jeweilige Funktion hin konfiguriert werden. Insbesondere kann das Brandbegrenzungsmaterial ein temperaturbeständiges Material sein, das nicht zwangsläufig formstabil sein muss und/oder das nichts zwangsläufig eine Schersteifigkeit aufweisen muss.

Vorteilhaft kann das Brandbegrenzungsmaterial der Batterieeinheit Siliziumoxid-Fasern und/oder Glasfasern mit einer Siliziumbeschichtung aufweisen.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierte Nutzfahrzeuge nutzbaren Kapazitäten entstehen können. Dies trägt zu einer weiteren Verbesserung der Betriebssicherheit bei.

Vorteilhaft kann das Brandbegrenzungsmaterial der Batterieeinheit ein Gewebe und/oder ein Vlies aufweisen.

Dadurch ist eine Anordnung des Brandbegrenzungsmaterials derart, dass es die Batterie wenigstens teilweise umgibt und zu einer Hemmung einer Hitze- und/oder Flammenausbreitung beiträgt, in einfacher Weise realisierbar. Dies trägt zu einer weiteren Verbesserung der Betriebssicherheit bei.

Vorteilhaft kann das Brandbegrenzungsmaterial der Batterieeinheit ausgestaltet sein, Temperaturen von 1000 °C oder mehr, von 1200 °C oder mehr oder von 1300 °C oder mehr zerstörungsfrei standzuhalten.

Dadurch kann das Brandbegrenzungsmaterial Temperaturen standhalten, wie sie beispielsweise bei thermischem Durchgehen oder Bränden von Lithium-Ionen-Batterien mit den für elektrifizierte Nutzfahrzeuganhänger oder elektrifizierte Nutzfahrzeuge nutzbaren Kapazitäten entstehen können. Dies trägt zu einer weiteren Verbesserung der Betriebssicherheit bei.

Vorteilhaft kann die Batterieeinheit eine Batterieeinheit für einen elektrifizierten Sattelauflieger sein.

Dadurch kann die Betriebssicherheit für den elektrifizierten Sattelauflieger erhöht werden, bei dem es aufgrund baulicher Gegebenheiten, insbesondere im Hinblick auf die Anordnung der Batterie, besonders herausfordernd ist, eine Hitze- und/oder Flammenausbreitung bei einem Batteriebrand oder bei thermischem Durchgehen der Batterie zu begrenzen.

Nach einem weiteren Aspekt der Erfindung wird ein Verfahren zum Erhöhen einer Betriebssicherheit eines elektrifizierten Nutzfahrzeuganhängers oder elektrifizierten Nutzfahrzeugs bereitgestellt, der oder das einen Ladeboden, einen elektrischen Achsantrieb, eine Batterie zum Versorgen des elektrischen Achsantriebs mit Energie und eine Abstützeinrichtung zum mechanischen Abstützen der Batterie aufweist. Das Verfahren weist ein Anordnen einer Brandbegrenzungseinrichtung auf, die ein Brandbegrenzungsmaterial aufweist, um eine Hemmung einer Flammenausbreitung und/oder einer Hitzeausbreitung von der Batterie zu bewirken oder zu unterstützen.

Durch das Verfahren werden verschiedene technische Vorteile und Wirkungen erzielt. Durch die Anordnung der Brandbegrenzungseinrichtung an oder in dem elektrifizierten Nutzfahrzeuganhänger oder elektrifizierten Nutzfahrzeug wird die Sicherheit im Falle eines thermischen Durchgehens, das zu einer Gasfreisetzung führen kann, und/oder eines Brands erhöht. Die Integration von Mitteln, mit denen die Flammenausbreitung und/oder die Hitzeausbreitung von der Batterie beispielsweise in Richtung des Ladebodens gehemmt wird oder mit denen eine derartige Hemmung unterstützt wird, führen zu einem wertvollen Zeitgewinn, mit dem das Risiko schwer kontrollierbarer Situationen signifikant verringert werden kann. Dies ist insbesondere bei der für elektrifizierte Nutzfahrzeuganhänger oder elektrifizierte Nutzfahrzeuge erforderlichen Auslegung von Batterien (beispielsweise mit einer Ausgestaltung, die eine Speicherung von mehr als 250 kWh, mehr als 500 kWh, mehr als 750 kWh oder mehr als 1000 kWh Energie ermöglicht) und im Hinblick auf die typischen baulichen Gegebenheiten relevant, die einen Zugang zur Batterie im in den Nutzfahrzeuganhänger oder dem Nutzfahrzeug verbauten Zustand erschweren können. Durch die Bereitstellung der Brandbegrenzungseinrichtung als von der Abstützeinrichtung verschiedene, zusätzliche Komponente kann die Abstützeinrichtung im Hinblick auf ihre mechanische Funktion und die Brandbegrenzungseinrichtung im Hinblick auf ihre Funktion der Hemmung einer Flammenausbreitung und/oder Hitzeausbreitung konfiguriert sein. Es ist insbesondere nicht erforderlich, die Brandbegrenzungseinrichtung so auszugestalten, dass sie eine mechanische Tragefunktion für die Batterie ausführen kann.

Optionale Merkmale des Verfahrens und die damit jeweils erzielten Wirkungen entsprechen den unter Bezugnahme auf den elektrifizierten Nutzfahrzeuganhänger oder das elektrifizierte Nutzfahrzeug beschriebenen optionalen Merkmalen und Wirkungen.

Vorteilhaft kann das Verfahren zum Erhöhen einer Betriebssicherheit eines als elektrifizierter Sattelauflieger ausgestalteten elektrifizierten Nutzfahrzeuganhängers dienen.

Dadurch kann die Betriebssicherheit für den elektrifizierten Sattelauflieger erhöht werden, bei dem es aufgrund baulicher Gegebenheiten, insbesondere im Hinblick auf die Anordnung der Batterie, besonders herausfordernd ist, eine Hitze- und/oder Flammenausbreitung bei einem Batteriebrand oder bei thermischem Durchgehen der Batterie zu begrenzen.

Durch den elektrifizierten Nutzfahrzeuganhänger, das elektrifizierte Nutzfahrzeug und die Verfahren nach Aspekten und Ausführungsformen der Erfindung wird die Betriebssicherheit im Falle eines thermischen Durchgehens oder eines Brandes einer Batterie des elektrifizierten Nutzfahrzeuganhängers oder des elektrifizierten Nutzfahrzeugs erhöht. Die vorgeschlagenen Ausgestaltungen führen zu einer Hemmung von Hitze- und/oder Flammenausbreitung von der Batterie beispielsweise in Richtung eines Ladebodens und ermöglichen es Rettungskräften, gefahrenarm an dem elektrifizierten Nutzfahrzeuganhänger oder dem elektrifizierten Nutzfahrzeug zu arbeiten.

Weitere Vorteile, Merkmale und Einzelheiten der Erfindung ergeben sich aus der nachfolgenden Beschreibung bevorzugter Ausführungsformen. Ausführungsformen der Erfindung werden nachfolgend insbesondere unter Bezugnahme auf die Figuren beschrieben. Diese stellen die Ausführungsformen nicht notwendigerweise maßstäblich dar. Vielmehr sind die Figuren, wo zur Erläuterung zweckmäßig, in schematischer und/oder leicht verzerrter Form ausgeführt. In den Figuren sind Elemente, die sich hinsichtlich ihrer Ausgestaltung und/oder Funktion entsprechen, mit identischen oder ähnlichen Bezugszeichen bezeichnet.
Fig. 1 zeigt einen elektrifizierten Nutzfahrzeuganhänger oder ein elektrifiziertes Nutzfahrzeug nach einem Ausführungsbeispiel;
Fig. 2 zeigt eine Ausgestaltung einer Brandbegrenzungseinrichtung des elektrifizierten Nutzfahrzeuganhängers oder des elektrifizierten Nutzfahrzeugs nach einem Ausführungsbeispiel;
Fig. 3 zeigt eine weitere Ausgestaltung einer Brandbegrenzungseinrichtung des elektrifizierten Nutzfahrzeuganhängers oder des elektrifizierten Nutzfahrzeugs nach einem Ausführungsbeispiel;
Fig. 4 zeigt eine weitere mögliche Ausgestaltung einer Brandbegrenzungseinrichtung des elektrifizierten Nutzfahrzeuganhängers oder des elektrifizierten Nutzfahrzeugs nach einem Ausführungsbeispiel;
Fig. 5 zeigt eine noch weitere Ausgestaltung einer Brandbegrenzungseinrichtung des elektrifizierten Nutzfahrzeuganhängers oder des elektrifizierten Nutzfahrzeugs nach einem Ausführungsbeispiel;
Fig. 6 zeigt eine schematische Draufsicht einer Ausgestaltung eines Brandbegrenzungsmaterials der Brandbegrenzungseinrichtung;
Fig. 7 zeigt eine schematische Draufsicht einer weiteren Ausgestaltung eines Brandbegrenzungsmaterials der Brandbegrenzungseinrichtung;
Fig. 8 zeigt eine Ausgestaltung einer Batterieeinheit des elektrifizierten Nutzfahrzeuganhängers oder des elektrifizierten Nutzfahrzeugs nach einem Ausführungsbeispiel;
Fig. 9 zeigt eine weitere Ausgestaltung einer Batterieeinheit des elektrifizierten Nutzfahrzeuganhängers oder des elektrifizierten Nutzfahrzeugs nach einem Ausführungsbeispiel;
Fig. 10 zeigt eine weitere Ausgestaltung einer Batterieeinheit des elektrifizierten Nutzfahrzeuganhängers oder des elektrifizierten Nutzfahrzeugs nach einem Ausführungsbeispiel;
Fig. 11 zeigt eine Ausgestaltung einer Brandbegrenzungseinrichtung des elektrifizierten Nutzfahrzeuganhängers oder des elektrifizierten Nutzfahrzeugs nach einem Ausführungsbeispiel;
Fig. 12 zeigt eine Detailansicht der Brandbegrenzungseinrichtung von Fig. 11;
Fig. 13 zeigt eine weitere Ausgestaltung einer Brandbegrenzungseinrichtung in einer ersten Konfiguration;
Fig. 14 zeigt eine weitere Ausgestaltung einer Brandbegrenzungseinrichtung in einer zweiten Konfiguration;
Fig. 15 zeigt einen elektrifizierten Nutzfahrzeuganhänger oder ein elektrifiziertes Nutzfahrzeug nach einem weiteren Ausführungsbeispiel;
Fig. 16 zeigt einen elektrifizierten Nutzfahrzeuganhänger oder ein elektrifiziertes Nutzfahrzeug nach einem noch weiteren Ausführungsbeispiel;
Fig. 17 ist ein Flussdiagramm eines Verfahrens nach einem Ausführungsbeispiel;
Fig. 18 ist ein Flussdiagramm eines Verfahrens nach einem Ausführungsbeispiel; und
Fig. 19 ist ein Flussdiagramm eines Verfahrens nach einem Ausführungsbeispiel.

Die Erfindung, die nachfolgend unter Bezugnahme auf die in den Figuren dargestellten Ausführungsformen ausführlich beschrieben wird, stellt in technisch vorteilhafter Weise Einrichtungen zur Erhöhung der Betriebssicherheit eines elektrifizierten Nutzfahrzeuganhängers oder eines elektrifizierten Nutzfahrzeugs bereit. Dazu wird vorgeschlagen, eine Brandbegrenzungseinrichtung, die eine Flammen- und/oder Hitzeausbreitung von einer Batterie hemmen kann, in einen elektrifizierten Nutzfahrzeuganhänger oder ein elektrifiziertes Nutzfahrzeug zu integrieren, der oder das eine unterhalb eines Ladebodens angeordnete Batterie zur Energieversorgung eines elektrischen Achsantriebs aufweist.

Unter dem Begriff "elektrifizierter Nutzfahrzeuganhänger" wird ein Nutzfahrzeuganhänger mit einer Batterie und einem von der Batterie mit Energie versorgbaren Achsantrieb verstanden. Ein elektrifizierter Nutzfahrzeuganhänger ist somit ein Nutzfahrzeuganhänger, der mit einem elektrischen Antriebssystem ausgestattet ist. Ein elektrifizierter Nutzfahrzeuganhänger ist eingerichtet, unabhängig von einem Zugfahrzeug elektrische Energie zu rekuperieren, zu speichern und zu nutzen, um die Transporteffizienz zu steigern und die Treibhausemissionen zu reduzieren. Der elektrifizierte Nutzfahrzeuganhänger kann eine Batterie und regenerative Bremsmechanismen kombinieren, um eine Reichweite zu erhöhen und einen Energieverbrauch zu optimieren. Der elektrifizierte Nutzfahrzeuganhänger kann als elektrifizierter Sattelauflieger ausgestaltet sein. Ein elektrifizierter Sattelauflieger wird in der Technik auch als "eTrailer" bezeichnet. Der elektrifizierte Nutzfahrzeuganhänger muss nicht zwangsläufig als elektrifizierter Sattelauflieger ausgestaltet sein. Beispielsweise kann der elektrifizierte Nutzfahrzeuganhänger ein Zentralachs- oder Deichselanhänger sein.

Der Begriff "elektrifiziertes Nutzfahrzeug" beinhaltet insbesondere einen Lastkraftwagen oder ein Zugfahrzeug zur Kopplung mit einem Sattelauflieger, der oder das einen Ladeboden und eine Batterie aufweist, die unterhalb des Ladebodens (also zwischen dem Ladeboden und einer Standebene des elektrifizierten Nutzfahrzeugs) angeordnet ist.

Unter dem Begriff "Batterie" wird eine wiederaufladbare Batterie verstanden, die eingerichtet ist, einen Achsantrieb mit Energie zu versorgen und von einem Rekuperationsmechanismus geladen zu werden. Die Batterie kann eine Lithium-Ionen-Batterie sein und eine Kapazität aufweisen, die ausreichend ist, um den elektrischen Antrieb des Nutzfahrzeuganhängers mit Energie zu versorgen.

Unter dem Begriff "Batteriemanagementsystem" wird ein System verstanden, das eingerichtet ist, einen Ladezustand, eine Temperatur und eine Batteriegesundheit (beispielsweise eine Kapazitätsabnahme aufgrund von Batteriealterung) zu erfassen. Das Batteriemanagementsystem kann eine Schnittstelle zur kommunikativen Kopplung mit einem Datenbus des elektrifizierten Nutzfahrzeuganhängers und/oder einer Zugmaschine aufweisen, um batteriezustandsabhängige Daten bereitzustellen. Das Batteriemanagementsystem kann optional zur Durchführung von Steuerfunktionen eingerichtet sein, beispielsweise durch Vorheizen der Batterie zur Verbesserung eines Ladevorgangs, wenn die Fahrsituation eine Rekuperation in der Zukunft erwartbar macht.

Unter einem "Rekuperationsmechanismus" wird eine Einrichtung oder ein System verstanden, die oder das eingerichtet ist, kinetische Energie in elektrische Energie zur Speicherung in der Batterie umzuwandeln. Der Rekuperationsmechanismus kann eingerichtet sein, den elektrischen Achsantrieb in einen Generatormodus zu versetzen, um mechanische Energie in elektrische Energie umzuwandeln.

Unter einem "Brandbegrenzungsmaterial" wird ein feuerfestes Material verstanden, das darauf ausgelegt ist, eine Ausbreitung von Hitze und/oder Flammen eines Batteriebrandes zu verlangsamen. Beispielhaft sind feuerbeständige Gewebe, Gewirke, Schaumstoffe und Folien, die einen hohen Schmelzpunkt (beispielsweise von 1000 °C oder mehr) aufweisen. Derartige Brandbegrenzungsmaterialien können als Hüllen oder Barriereschichten der Batterie in den elektrifizierten Nutzfahrzeuganhänger oder das elektrifizierte Nutzfahrzeug integriert und/oder lösbar mit einer Komponente des elektrifizierten Nutzfahrzeuganhängers oder des elektrifizierten Nutzfahrzeugs koppelbar sein.

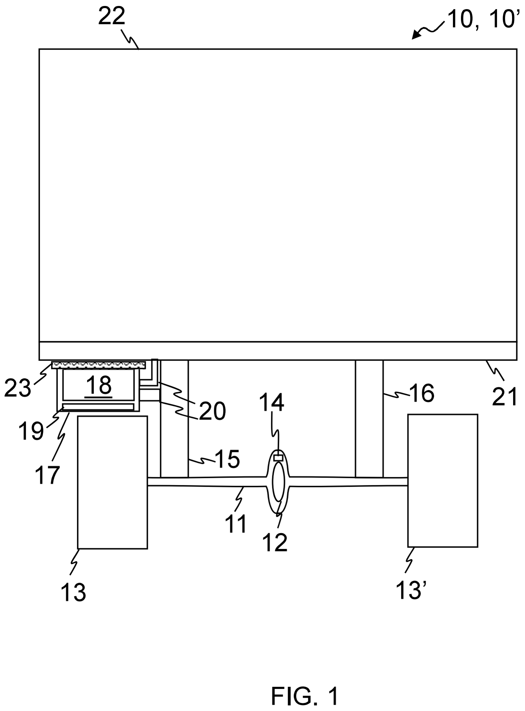

Fig. 1 zeigt eine Ausgestaltung eines elektrifizierten Nutzfahrzeuganhängers 10 oder eines elektrifizierten Nutzfahrzeugs 10'. Der Nutzfahrzeuganhänger 10 kann als ein elektrifizierter Sattelauflieger 10 ausgestaltet sein. Während nachfolgend primär auf eine Ausgestaltung als elektrifizierter Nutzfahrzeuganhänger Bezug genommen wird, sind die entsprechenden Merkmale auch bei einem elektrifizierten Nutzfahrzeug 10' nach einer Ausführungsform anwendbar. Der elektrifizierte Nutzfahrzeuganhänger 10 weist einen Ladeboden 21 auf. Der Ladeboden 21 ist zum Aufnehmen von Fracht eingerichtet. Der elektrifizierte Nutzfahrzeuganhänger 10 weist einen Aufbau 22 auf dem Ladeboden 21 auf. Der Aufbau 22 kann auf den Ladeboden 21 montiert sein und zur strukturellen Erweiterung und/oder Ladungssicherung dienen. Der elektrifizierte Nutzfahrzeuganhänger 10 weist Längsträger 15, 16 auf, die unterhalb des Ladebodens 21 angeordnet sind und diesen mechanisch unterstützen. Der elektrifizierte Nutzfahrzeuganhänger 10 weist eine Antriebsachse 11, die mit mindestens einem Rad 13, 13' des elektrifizierten Nutzfahrzeuganhängers verbunden ist. Die Antriebsachse 11 weist einen elektrischen Achsantrieb 12 auf, um ein Rad 13 oder mehrere Räder 13, 13' des elektrifizierten Nutzfahrzeuganhängers anzutreiben. Der elektrifizierte Nutzfahrzeuganhänger 11 weist eine Batterie 18 auf, die eingerichtet ist, den elektrischen Achsantrieb 12 mit Energie zu versorgen. Die Batterie 18 kann als Lithium-Ionen-Akku ausgestaltet sein. Die Batterie 18 kann in eine Batterieeinheit 17 integriert sein, die auch ein Batteriemanagementsystem 19 aufweisen kann. Der elektrifizierte Nutzfahrzeuganhänger 10 weist einen Rekuperationsmechanismus 14 auf, der eingerichtet ist, beispielsweise bei einem Bremsvorgang und/oder bei Bergabfahrt mechanische Energie in elektrische Energie umzuwandeln, die in der Batterie 18 speicherbar ist. Der Rekuperationsmechanismus 14 kann eingerichtet sein, den Achsantrieb 12 in einen Generatormodus zu versetzen, um mechanische Energie in elektrische Energie umzuwandeln, die in der Batterie 18 zu speichern ist. Der elektrifizierte Nutzfahrzeuganhänger 10 weist eine Abstützeinrichtung 20 auf. Die Abstützeinrichtung 20 kann mit einer Abdeckung der Batterieeinheit 17 und einer Strukturkomponente des elektrifizierten Nutzfahrzeuganhängers 10, beispielsweise mit dem Ladeboden 21 und/oder wenigstens einem Längsträger 15, 16, unmittelbar oder mittelbar verbunden sein, um die Batterieeinheit 17 mit der Batterie 18 mechanisch abzustützen.

Der elektrifizierte Nutzfahrzeuganhänger 10 weist eine Brandbegrenzungseinrichtung auf, die wenigstens ein sich zwischen der Batterie 18 und dem Ladeboden 21 erstreckendes Brandbegrenzungsmaterial 23 aufweist. Das Brandbegrenzungsmaterial 23 kann eingerichtet sein, den bei thermischem Durchgehen oder einem Brand eines Lithium-Ionen-Akkus entstehenden Temperaturen zerstörungsfrei standzuhalten, beispielsweise Temperaturen von 1000 °C oder mehr. Das Brandbegrenzungsmaterial 23 kann siliziumhaltige Fasern aufweisen. Das Brandbegrenzungsmaterial 23 kann Glasfasern oder Silica-Fasern aufweisen, die in einem Gewebe oder Vlies angeordnet sein können. Das Brandbegrenzungsmaterial 23 hemmt durch seine Ausgestaltung und Position die Ausbreitung von Hitze und/oder Flammen von der Batterie jedenfalls in Richtung des Ladebodens 21. Das Brandbegrenzungsmaterial 23 kann in den elektrifizierten Nutzfahrzeuganhänger 10 derart integriert sein, dass es ohne Demontage der Batterieeinheit 17 mit der Batterie 18 nicht zerstörungsfrei von dem elektrifizierten Nutzfahrzeuganhänger 10 entfernbar ist. Das Brandbegrenzungsmaterial 23 kann somit eine Hemmung von Hitze und/oder Flammen in einem Bereich des elektrifizierten Nutzfahrzeuganhängers 10 bereitstellen, der ohne eine potenziell gefährliche Demontage der Batterieeinheit 17 im Fall eines Brands oder eines thermischen Durchgehens für Rettungskräfte nicht gefahrenarm zugänglich ist.

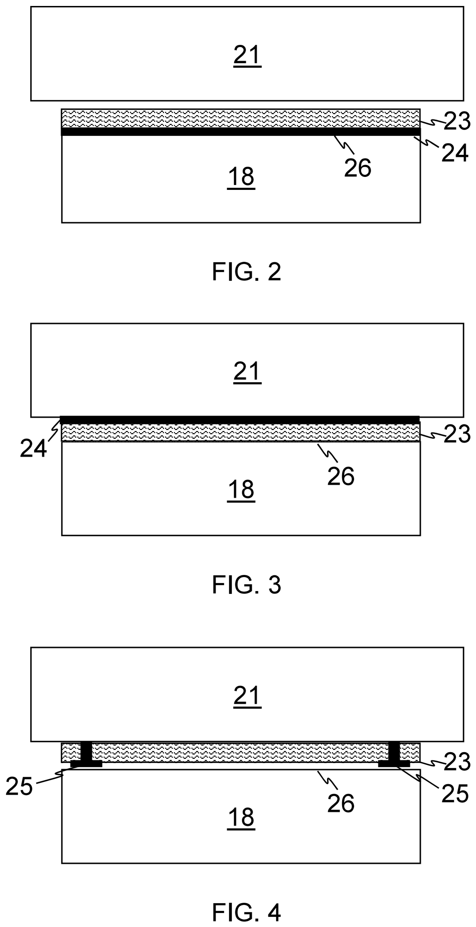

Fig. 2, Fig. 3, Fig. 4 und Fig. 5 zeigen beispielhafte Anordnungen des Brandbegrenzungsmaterials 23, die bei dem elektrifizierten Nutzfahrzeuganhänger 10 oder dem elektrifizierten Nutzfahrzeug 10' anwendbar sind.

Fig. 2 und Fig. 3 zeigen Ausgestaltungen, bei denen das Brandbegrenzungsmaterial 23 durch eine Fixierschicht 24 flächig in seiner Position zwischen der Batterie 18 und dem Ladeboden 21 fixiert wird. Die Fixierschicht 24 kann eine adhäsive Schicht von wärmebeständigem Klebstoff sein. Die Fixierschicht 24 kann an einer zum Ladeboden 21 hin gerichteten Wand 26 der Batterieeinheit 17 oder der Batterie 18 unmittelbar flächig angebracht sein (Fig. 2). Die Fixierschicht 24 kann an dem Ladeboden 21 unmittelbar flächig angebracht sein (Fig. 3), wobei sich das Brandbegrenzungsmaterial 23 vom Ladeboden 21 in Richtung der Batterie 18 erstreckt.

Fig. 4 zeigt eine Ausgestaltung, bei der das Brandbegrenzungsmaterial 23 durch mehrere Fixierelemente 25 in seiner Position zwischen der Batterie 18 und dem Ladeboden 21 fixiert wird. Die Fixierelemente 25 können unmittelbar an dem Brandbegrenzungsmaterial 23 und dem Ladeboden 21 anliegen, wobei sich das Brandbegrenzungsmaterial 23 derart zwischen dem Ladeboden 21 und der Batterie 18 erstreckt, dass es die Batterie 18 in Richtung des Ladebodens 21 vollständig überdeckt.

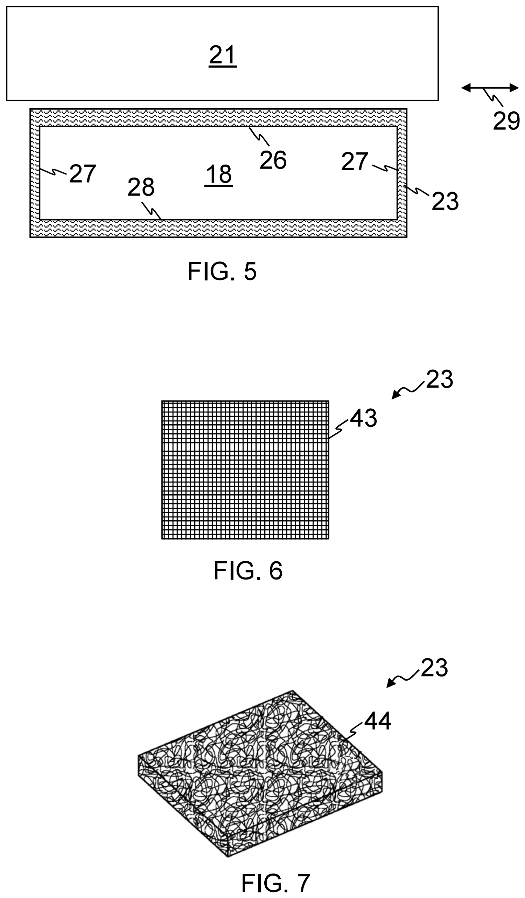

Fig. 5 zeigt eine Ausgestaltung, bei der das Brandbegrenzungsmaterial 23 die Batterie 18 nicht nur an der zum Ladeboden hin weisenden Seite 26, sondern auch eine oder mehrere sich quer zu einer Ladebodenebene 29 erstreckende weitere Außenseiten 27 und/oder eine vom Ladeboden 21 weg weisenden Bodenfläche 28 der Batterie 18 flächig bedecken. Das Brandbegrenzungsmaterial 23 kann einlagig oder mehrlagig um die Batterie 18 gewickelt sein, wobei Durchführungen für die elektrischen Leitungen vorgesehen sind, die die Batterie 18 mit dem Achsantrieb 12 verbinden.

Fig. 6 zeigt in einer Draufsicht eine Ausgestaltung des Brandbegrenzungsmaterials 23, die bei jeder der unter Bezugnahme auf Fig. 1, Fig. 2, Fig. 3, Fig. 4 und Fig. 5 beschriebenen Ausgestaltungen anwendbar ist. Das Brandbegrenzungsmaterial 23 ist als ein Gewebe 43 von Fasern (beispielsweise Glasfasern und/oder Silica-Fasern) ausgebildet. Das Gewebe 43 kann ein Glasfasergewebe aufweisen. Ein Glasfasergewebe bietet eine hohe Temperaturbeständigkeit und gute chemische Beständigkeit. Glasfasergewebe sind nicht brennbar. Das Glasfasergewebe kann beschichtet sein. Das Gewebe 43 kann ein Gewebe mit einer siliziumhaltigen Beschichtung aufweisen. Dadurch kann eine verbesserte Hitzebeständigkeit und Dauerbeständigkeit erreicht werden. Gewebe mit siliziumhaltiger Beschichtung erhöhen die Wasser- und Ölbeständigkeit des Gewebes und verbessern die Leistung in feuchten Umgebungen. Sie sind daher besonders geeignet für den Einsatz in elektrifizierten Nutzfahrzeuganhängern 10 oder elektrifizierten Nutzfahrzeugen 10'. Das Gewebe 43 kann ein Kompositgewebe aufweisen, das verschiedene Materialien kombiniert, um die Vorteile mehrerer Bestandteile zu maximieren. Zum Beispiel kann ein Gewebe 43 aus Aramidfasern und Glasfasern verwendet werden, um sowohl Festigkeit als auch hohe Temperaturbeständigkeit zu bieten.

Fig. 7 zeigt in einer Draufsicht eine Ausgestaltung des Brandbegrenzungsmaterials 23, die bei jeder der unter Bezugnahme auf Fig. 1, Fig. 2, Fig. 3, Fig. 4 und Fig. 5 beschriebenen Ausgestaltungen anwendbar ist. Das Brandbegrenzungsmaterial 23 ist als ein Gewirk 44 von Fasern (beispielsweise Glasfasern und/oder Silica-Fasern), also als ein Vlies 44, ausgebildet. Das Vlies 44 kann ein Glasfaser-Vlies, ein hochtemperaturbeständiges Vlies und/oder ein Vlies mit einer siliziumhaltigen Beschichtung aufweisen. Die speziellen Vliesstoffe wirken als Barriere, die die Wärmeabgabe verringert und die Ausbreitung eines Feuers auf benachbarte Materialien hemmt.

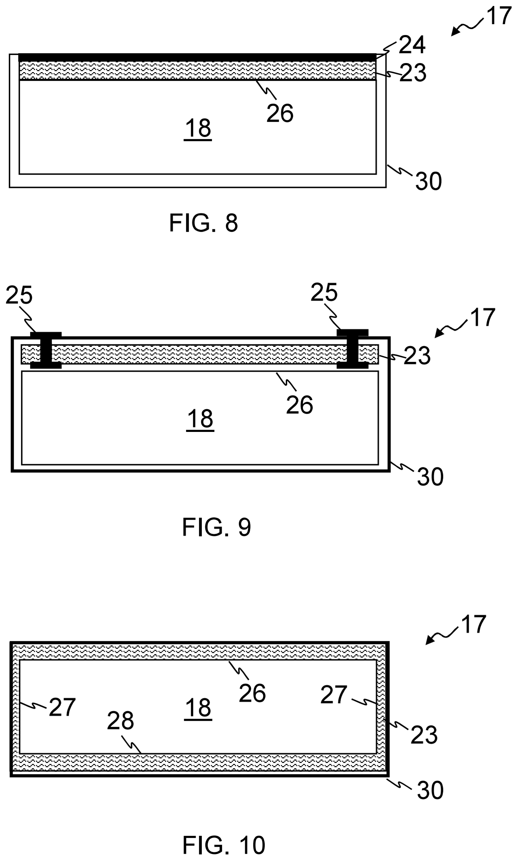

Fig. 8, Fig. 9 und Fig. 10 zeigen beispielhafte Anordnungen des Brandbegrenzungsmaterials 23, die bei dem elektrifizierten Nutzfahrzeuganhänger 10 oder dem elektrifizierten Nutzfahrzeug 10' anwendbar sind. Dabei ist wenigstens ein Teil des Brandbegrenzungsmaterials 23 in eine Batterieeinheit 17 integriert.

Fig. 8 zeigt eine Ausgestaltung, bei der das Brandbegrenzungsmaterial 23 durch eine Fixierschicht 24 flächig in seiner Position fixiert wird, in der es eine zum Ladeboden 21 hin weisende Wand 26 der Batterie 18 flächig überdeckt. Die Fixierschicht 24 kann eine adhäsive Schicht von wärmebeständigem Klebstoff sein. Die Fixierschicht 24 kann an einer Abdeckung 30 der Batterieeinheit 17 unmittelbar anliegen, um das Brandbegrenzungsmaterial 23 in seiner Position zu halten. Die Batterie 18 kann von der Abdeckung 30 umgeben sein, wobei die Abdeckung 30 einen Schutz vor externen Einwirkungen bereitstellt. Durch die Integration des Brandbegrenzungsmaterials 23 in die Batterieeinheit 17 wird eine einfache Installierbarkeit bei gleichzeitiger Gewährleistung einer erhöhten Betriebssicherheit erzielt.

Fig. 9 zeigt eine Ausgestaltung, bei der das Brandbegrenzungsmaterial 23 durch Fixierelemente 25 in seiner Position fixiert wird, in der es eine zum Ladeboden 21 hin weisende Wand 26 der Batterie 18 flächig überdeckt. Die Fixierelemente 25 können an einer Abdeckung 30 der Batterieeinheit 17 unmittelbar anliegen oder mit dieser in unmittelbarem Eingriff stehen, um das Brandbegrenzungsmaterial 23 in seiner Position zu halten. Die Batterie 18 kann von der Abdeckung 30 umgeben sein, wobei die Abdeckung 30 einen Schutz vor externen Einwirkungen bereitstellt. Durch die Integration des Brandbegrenzungsmaterials 23 in die Batterieeinheit 17 wird eine einfache Installierbarkeit bei gleichzeitiger Gewährleistung einer erhöhten Betriebssicherheit erzielt.

Fig. 10 zeigt eine Ausgestaltung, bei der das Brandbegrenzungsmaterial 23 innerhalb der Abdeckung 30 die Batterie 18 nicht nur an der zum Ladeboden hin weisenden Wand 26, sondern auch eine oder mehrere sich quer zur Wand 26 erstreckende weitere Außenseiten 27 und/oder eine Bodenfläche 28 der Batterie 18 flächig bedeckt. Das Brandbegrenzungsmaterial 23 kann einlagig oder mehrlagig um die Batterie 18 gewickelt sein, wobei Durchführungen für die elektrischen Leitungen vorgesehen sind, die die Batterie 18 mit dem Achsantrieb 12 verbinden. Das Brandbegrenzungsmaterial 23 kann von der Abdeckung kraftschlüssig, insbesondere reibschlüssig, an der Batterie 18 gehalten werden. Durch die Integration des Brandbegrenzungsmaterials 23 in die Batterieeinheit 17 wird eine einfache Installierbarkeit bei gleichzeitiger Gewährleistung einer erhöhten Betriebssicherheit erzielt.

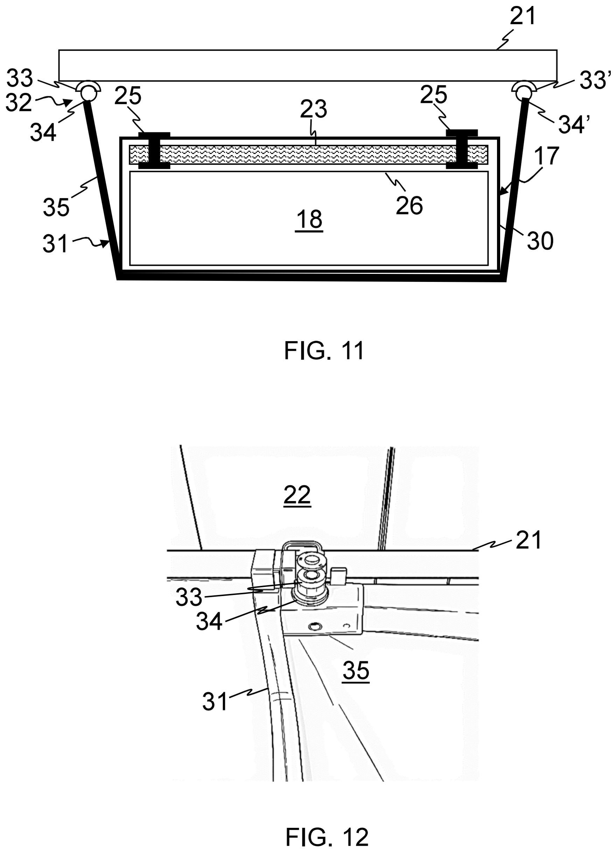

Fig. 11 zeigt eine Ausgestaltung, bei der die Brandbegrenzungseinrichtung des elektrifizierten Nutzfahrzeuganhängers 10 oder des elektrifizierten Nutzfahrzeugs 10' zusätzlich zu dem sich zwischen der Batterie 18 und dem Ladeboden 23 erstreckenden Teil des Brandbegrenzungsmaterials 23 eine Befestigungseinrichtung 32 aufweist, mit der ein Brandbegrenzungselement 31 reversibel lösbar befestigbar ist. Das Brandbegrenzungselement 31 weist einen weiteren Teil des Brandbegrenzungsmaterials 35 auf. Das Brandbegrenzungsmaterial 35 kann - wie unter Bezugnahme auf Fig. 6 und Fig. 7 beschrieben - ein Gewebe oder Vlies von temperaturbeständigen Fasern, beispielsweise Glasfasern und/oder Silica-Fasern, aufweisen. Die Befestigungseinrichtung 32 weist ein Befestigerelement 33 und ein weiteres Befestigerelement 33' auf. Das Befestigerelement 33 ist eingerichtet, mit einem korrespondierenden Verbinder 34 des Brandbegrenzungselements 31 in Eingriff zu treten. Das weitere Befestigerelement 33' ist eingerichtet, mit einem korrespondierenden weiteren Verbinder 34' des Brandbegrenzungselements 31 in Eingriff zu treten. Die Befestigungseinrichtung 32 und das Brandbegrenzungselement 31 sind dabei so aufeinander abgestimmt, dass sich das Brandbegrenzungselement 31 wenigstens teilweise (beispielsweise auf einer ladebodenabgewandten Seite der Batterie 18) um die Batterie 18 erstreckt, wenn sowohl das Befestigerelement 33 in Eingriff mit dem Verbinder 34 steht als auch das weitere Befestigerelement 33' in Eingriff mit dem weiteren Verbinder 34' steht. Das weitere Befestigerelement 33' kann vorteilhaft so angeordnet sein, dass das Befestigerelement 33 und das weitere Befestigerelement 33' an transversal zur Längsrichtung des elektrifizierten Nutzfahrzeuganhängers 10 (beispielsweise des elektrifizierten Sattelaufliegers) voneinander beabstandeten Seiten des elektrifizierten Nutzfahrzeuganhängers 10 oder des elektrifizierten Nutzfahrzeugs 10' vorgesehen sind. Dies gilt entsprechend bei einer an dem elektrifizierten Nutzfahrzeug 10' vorgesehenen Befestigungseinrichtung 32.

Die Befestigungseinrichtung 32 kann an einer gut zugänglichen Strukturkomponente, beispielsweise dem Ladeboden 21 oder einer Seitenwand des Aufbaus 22, des elektrifizierten Nutzfahrzeuganhängers 10 oder des elektrifizierten Nutzfahrzeugs 10' angeordnet sein. Die Befestigungseinrichtung 32 kann vorteilhaft beabstandet von der Batterie 18 angeordnet sein, um eine gefahrenarme Anbringung des Brandbegrenzungselements 31 an dem elektrifizierten Nutzfahrzeuganhänger 10 oder dem elektrifizierten Nutzfahrzeug 10' zu ermöglichen.

Fig. 12 zeigt eine beispielhafte Ausgestaltung der Befestigungseinrichtung 32, bei der das Befestigerelement 33 als männliches Befestigerelement 33 und der Verbinder 34 als weiblicher Verbinder 34 ausgestaltet ist, der mit dem männlichen Befestigerelement 33 in reversibel lösbarer Weise in Eingriff bringbar ist. Bei einer weiteren Ausgestaltung kann das Befestigerelement 33 als weibliches Befestigerelement 33 und der Verbinder 34 als korrespondierender männlicher Verbinder ausgestaltet sein. Eine identische oder ähnliche Ausgestaltung kann für den weiteren Verbinder 34' und das weitere Befestigerelement 33' realisiert werden.

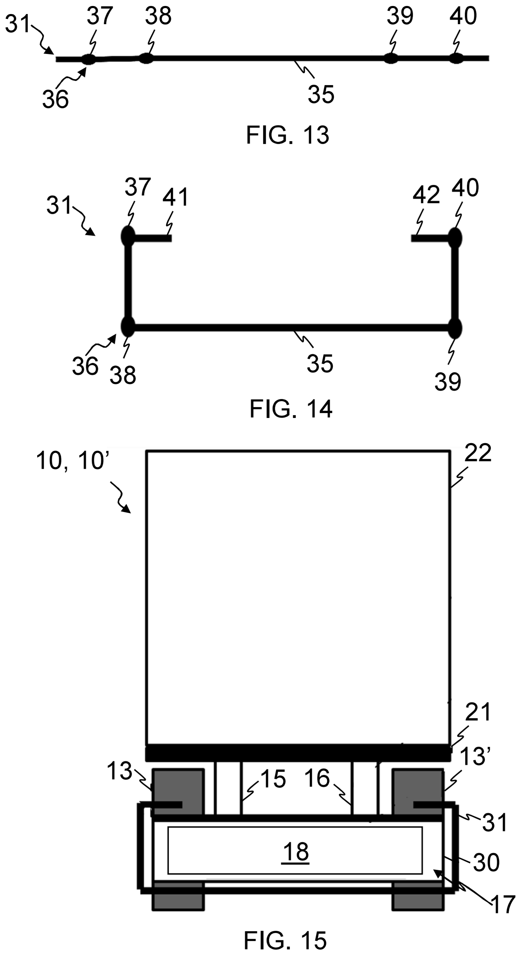

Fig. 13, Fig. 14, Fig. 15 und Fig. 16 veranschaulichen weitere Ausgestaltungen des Brandbegrenzungselements 31. Das Brandbegrenzungselement 31 von Fig. 13, Fig. 14, Fig. 15 und Fig. 16 ist als aufklappbares Brandbegrenzungselement 31 ausgestaltet, das zwischen einer ersten Konfiguration (Fig. 13) und einer zweiten Konfiguration (Fig. 14) zerstörungsfrei reversibel überführbar ist. Das Brandbegrenzungselement 31 kann einen Rahmen 36 mit mehreren Gelenken 37, 38, 39, 40, beispielsweise Scharnieren 37, 48, 39, 40, aufweisen. Über den Rahmen 31 ist der Teil des Brandbegrenzungsmaterials 35 gespannt, der im Brandbegrenzungselement 31 vorgesehen ist. Durch Überführen des Brandbegrenzungselements 31 aus der ersten Konfiguration (Fig. 13) in die zweite Konfiguration (Fig. 14) wird das Brandbegrenzungselement 31 derart aufgeklappt, dass es formschlüssig und/oder reibschlüssig an dem elektrifizierten Nutzfahrzeuganhänger 10 (beispielsweise dem elektrifizierten Sattelauflieger) oder dem elektrifizierten Nutzfahrzeug 10' gehalten werden kann und dabei wenigstens die Batterie 18 teilweise (beispielsweise wenigstens an der ladebodenabgewandten Seite) überdeckt. Das Brandbegrenzungselement 31 kann so ausgestaltet sein, dass es in der zweiten Konfiguration (Fig. 14) Anlageflächen 41, 42 zur flächigen Anlage beispielsweise an der Abdeckung 30 der Batterieeinheit 17 aufweist, um formschlüssig so gehalten zu werden, dass das Brandbegrenzungselement 31 wenigstens die Batterie 18 teilweise (beispielsweise wenigstens an der ladebodenabgewandten Seite) überdeckt.

Fig. 15 zeigt eine Ausgestaltung des Brandbegrenzungselements 31, bei der das Brandbegrenzungselement 31 eingerichtet ist, die Batterie 18 teilweise zu überdecken, ohne sich um den Ladeboden 21 zu erstrecken.

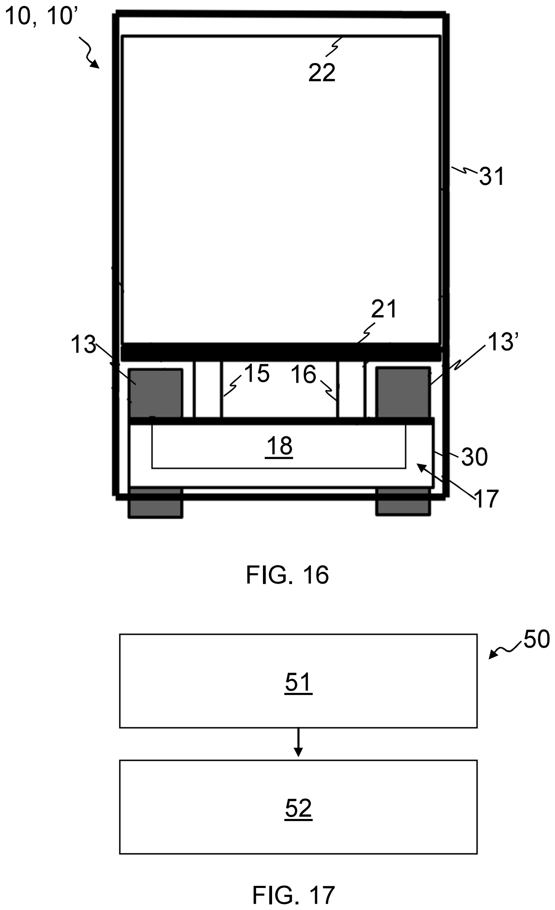

Fig. 16 zeigt eine weitere Ausgestaltung des Brandbegrenzungselements 31, bei der das Brandbegrenzungselement 31 eingerichtet ist, sich sowohl um die Batterie 18 als auch den Ladeboden 21 (optional auch um den Aufbau 22) zu erstrecken.

Fig. 17 ist ein Flussdiagramm eines Verfahrens 50 zum Erhöhen einer Betriebssicherheit eines elektrifizierten Nutzfahrzeuganhängers 10, der als ein elektrifizierter Sattelauflieger 10 ausgestaltet sein kann, oder eines elektrifizierten Nutzfahrzeugs 10'. Der elektrifizierte Nutzfahrzeuganhänger 10 oder das elektrifizierte Nutzfahrzeug 10' kann jede der unter Bezugnahme auf Fig. 1 bis Fig. 16 offenbarten Ausgestaltungen aufweisen.

Das Verfahren 50 weist einen Schritt 51 auf, in dem ein Brandbegrenzungsmaterial 23 an einem elektrifizierten Nutzfahrzeuganhänger 10 oder einem elektrifizierten Nutzfahrzeug 10' so angeordnet wird, dass es sich zwischen der Batterie 18 und dem Ladeboden 21 erstrecken kann. Das Anordnen des Brandbegrenzungsmaterials 23 kann vor Installation der Batterie 18 im elektrifizierten Nutzfahrzeuganhänger 10 oder im elektrifizierten Nutzfahrzeug 10' erfolgen. Das Brandbegrenzungsmaterial 23 kann dabei am Ladeboden oder als Bestandteil der Batterieeinheit 17 angeordnet werden.

Das Verfahren 50 weist einen Schritt 52 auf, in dem die Batterie 18 so in dem elektrifizierten Nutzfahrzeuganhänger 10 oder in dem elektrifizierten Nutzfahrzeug 10' installiert wird, dass sich das Brandbegrenzungsmaterial 23 zwischen der Batterie 18 und dem Ladeboden 21 erstreckt.

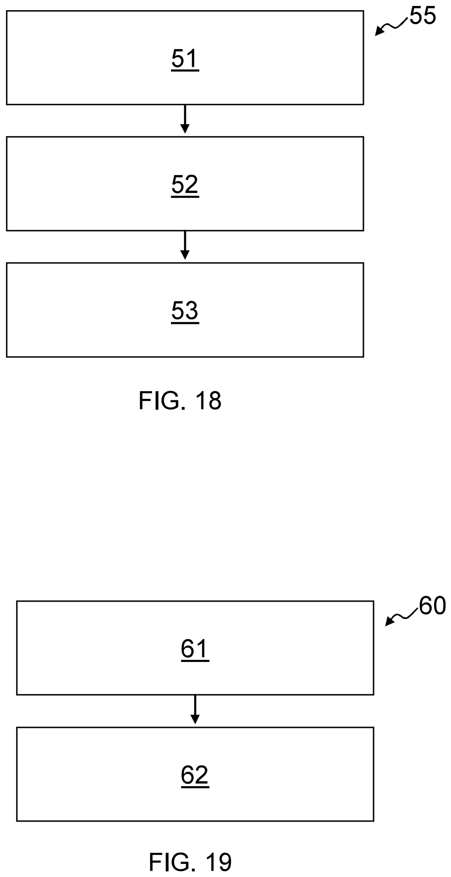

Fig. 18 ist ein Flussdiagramm eines Verfahrens 55 zum Erhöhen einer Betriebssicherheit eines elektrifizierten Nutzfahrzeuganhängers 10, der als ein elektrifizierter Sattelauflieger 10 ausgestaltet sein kann, oder eines elektrifizierten Nutzfahrzeugs 10'. Der elektrifizierte Nutzfahrzeuganhänger 10 oder das elektrifizierte Nutzfahrzeug 10' kann jede der unter Bezugnahme auf Fig. 1 bis Fig. 16 offenbarten Ausgestaltungen aufweisen. Die Verfahrensschritte 51 und 52 können wie unter Bezugnahme auf Fig. 17 beschrieben ausgeführt werden.

Bei Schritt 53 kann eine Befestigungseinrichtung 32 zum reversibel lösbaren Befestigen eines Brandbegrenzungselements 31 in dem elektrifizierten Nutzfahrzeuganhänger 10 oder in dem elektrifizierten Nutzfahrzeug 10' angeordnet werden. Das Anordnen der Befestigungseinrichtung 32 kann ein Anbringen mehrerer Befestigerelemente 33, 33' aufweisen, die jeweils zum Eingriff mit einem korrespondierenden Verbinder 34, 34' des Brandbegrenzungselements 31 eingerichtet sein können. Schritt 53 kann auch vor Schritt 51 und/oder vor Schritt 52 ausgeführt werden.

Fig. 16 ist ein Flussdiagramm eines Verfahrens 60 zum Erhöhen einer Betriebssicherheit eines elektrifizierten Nutzfahrzeuganhängers 10, der als ein elektrifizierter Sattelauflieger 10 ausgestaltet sein kann, oder eines elektrifizierten Nutzfahrzeugs 10'. Der elektrifizierte Nutzfahrzeuganhänger 10 oder das elektrifizierte Nutzfahrzeug 10' kann jede der unter Bezugnahme auf Fig. 1 bis Fig. 16 offenbarten Ausgestaltungen aufweisen.

Das Verfahren 60 weist einen Schritt 61 auf, in dem wenigstens ein Rad des elektrifizierten Nutzfahrzeuganhängers 10 oder des elektrifizierten Nutzfahrzeugs 10' von dem elektrischen Achsantrieb 12 angetrieben wird und im dem durch Rekuperation gewonnene Energie in der Batterie 18 gespeichert wird.

Das Verfahren 60 weist einen Schritt 62 auf, in dem die Brandbegrenzungseinrichtung des elektrifizierten Nutzfahrzeuganhängers 10 oder des elektrifizierten Nutzfahrzeugs 10' eine Hitze- und/oder Flammenausbreitung von der Batterie 10 wenigstens in Richtung des Ladebodens 21 hemmt.

Während Ausführungsbeispiele unter Bezugnahme auf die Figuren detailliert beschrieben wurde, können Abwandlungen bei weiteren Ausführungsbeispielen realisiert werden. Während beispielsweise ein elektrifizierter Nutzfahrzeuganhänger detailliert beschrieben wurde, der als elektrifizierter Sattelauflieger ausgestaltet ist, kann der elektrifizierte Nutzfahrzeuganhänger eine andere Ausgestaltung aufweisen. Beispielsweise kann der elektrifizierte Nutzfahrzeuganhänger als elektrifizierter Zentralachs- oder Deichselanhänger ausgestaltet sein. Die offenbarten Techniken sind nicht auf elektrifizierte Nutzfahrzeuganhänger beschränkt, sondern können auch bei elektrifizierten Nutzfahrzeugen eingesetzt werden, bei denen eine Batterie zur Energieversorgung eines Elektroantriebs unterhalb eines Ladebodens angeordnet ist.

Der elektrifizierte Nutzfahrzeuganhänger, das elektrifizierte Nutzfahrzeug, das Brandbegrenzungselement, die Batterieeinheit und das Verfahren nach Ausführungsbeispielen bieten Verbesserungen im Hinblick auf die Sicherheit im Straßenverkehr. Insbesondere ermöglichen es elektrifizierte Nutzfahrzeuganhänger, elektrifizierte Nutzfahrzeuge, das Brandbegrenzungselement, die Batterieeinheit und das Verfahren nach Ausführungsformen jeweils, eine Ausbreitung von Hitze und/oder Flammen im Falle eines thermischen Durchgehens oder Brandes der Batterie des elektrifizierten Nutzfahrzeuganhängers oder des elektrifizierten Nutzfahrzeugs zu hemmen.

### Bezugszeichenliste (Teil der Beschreibung)

- 10: elektrifizierter Nutzfahrzeuganhänger
- 10': elektrifiziertes Nutzfahrzeug
- 11: Achse
- 12: elektrischer Antrieb
- 13, 13': Rad
- 14: Rekuperationsmechanismus
- 15, 16: Längsträger
- 17: Batterieeinheit
- 18: Batterie
- 19: Batteriemanagementsystem
- 20: Abstützeinrichtung
- 21: Ladeboden
- 22: Aufbau
- 23: Brandbegrenzungsmaterial
- 24: Fixierschicht
- 25: Fixierelement
- 26: Batterieseite
- 27: weitere Batterieseite
- 28: weitere Batterieseite
- 29: Ladeboden-Ebene
- 30: Abdeckung
- 31: Brandbegrenzungselement
- 32: Befestigungseinrichtung
- 33: Befestigerelement
- 34: Verbinder
- 33': weiteres Befestigerelement
- 34': weiterer Verbinder
- 35: Brandbegrenzungsmaterial
- 36: Rahmen
- 37: erstes Gelenk
- 38: zweites Gelenk
- 39: drittes Gelenk
- 40: viertes Gelenk
- 41: Brandschutzelementabschnitt
- 42: weiterer Brandschutzelementabschnitt
- 43: Gewebe
- 44: Gewirk oder Vlies
- 50: Verfahren
- 51, 52: Verfahrensschritt
- 55: Verfahren
- 53: Verfahrensschritt
- 60: Verfahren
- 61, 62: Verfahrensschritt

## Patentansprüche

1. Elektrifizierter Nutzfahrzeuganhänger (10) oder elektrifiziertes Nutzfahrzeug (10'), aufweisend:
einen Ladeboden (21);
einen elektrischen Achsantrieb (12);
eine Batterie (18) zum Versorgen des elektrischen Achsantriebs (12) mit Energie;
eine Abstützeinrichtung (20), die eingerichtet ist, die Batterie (18) unterhalb des Ladebodens (21) mechanisch abzustützen; und
eine Brandbegrenzungseinrichtung (23; 23, 31, 32), die ein Brandbegrenzungsmaterial (23; 35) aufweist und eingerichtet ist, eine Hemmung einer Flammenausbreitung und/oder einer Hitzeausbreitung von der Batterie (18) zu bewirken oder zu unterstützen.

2. Elektrifizierter Nutzfahrzeuganhänger (10) oder elektrifiziertes Nutzfahrzeug (10') nach Anspruch 1, wobei sich wenigstens ein Teil des Brandbegrenzungsmaterials (23) zwischen der Batterie (18) und dem Ladeboden (21) erstreckt.

3. Elektrifizierter Nutzfahrzeuganhänger (10) oder elektrifiziertes Nutzfahrzeug (10') nach Anspruch 2, wobei das Brandbegrenzungsmaterial (23; 35) derart angeordnet ist, dass sich ein zwischen der Batterie (18) und dem Ladeboden (21) angeordneter Teil des Brandbegrenzungsmaterials (23) kontinuierlich entlang einer Ebene (29) des Ladebodens (21) erstreckt.

4. Elektrifizierter Nutzfahrzeuganhänger (10) oder elektrifiziertes Nutzfahrzeug (10') nach Anspruch 3, wobei das Brandbegrenzungsmaterial (23; 35) derart angeordnet ist, dass es die Batterie (18) an einer in Richtung zum Ladeboden weisenden Batterieseite (26) vollständig überdeckt.

5. Elektrifizierter Nutzfahrzeuganhänger (10) oder elektrifiziertes Nutzfahrzeug (10') nach Anspruch 4, wobei das Brandbegrenzungsmaterial (23; 35) derart angeordnet ist, dass es die Batterie (18) an mehreren weiteren Batterieseiten (27, 28), die von der zum Ladeboden (21) weisenden Batterieseite (26) beabstandet sind und/oder sich quer zur Ebene des Ladebodens (21) erstrecken, wenigstens teilweise überdeckt.

6. Elektrifizierter Nutzfahrzeuganhänger (10) oder elektrifiziertes Nutzfahrzeug (10') nach einem der Ansprüche 2 bis 5, ferner aufweisend ein Fixiermittel (24, 25), das das Brandbegrenzungsmaterial (23; 35) relativ zur Batterie (18) und/oder relativ zum Ladeboden (21) fixiert.

7. Elektrifizierter Nutzfahrzeuganhänger (10) oder elektrifiziertes Nutzfahrzeug (10') nach einem der Ansprüche 2 bis 6, wobei der elektrifizierte Nutzfahrzeuganhänger (10) oder das elektrifizierte Nutzfahrzeug (10') eine Batterieeinheit (17) aufweist, die die Batterie (18), wenigstens einen Teil des Brandbegrenzungsmaterials (23) und ein Batteriemanagementsystem (19) aufweist.

8. Elektrifizierter Nutzfahrzeuganhänger (10) oder elektrifiziertes Nutzfahrzeug (10') nach einem der vorhergehenden Ansprüche, wobei die Brandbegrenzungseinrichtung (23; 23, 31, 32) eine Befestigungseinrichtung (32) zum Befestigen eines Brandbegrenzungselements (31), das wenigstens einen weiteren Teil des Brandbegrenzungsmaterials (35) aufweist, aufweist.

9. Elektrifizierter Nutzfahrzeuganhänger (10) oder elektrifiziertes Nutzfahrzeug (10') nach Anspruch 8, wobei die Befestigungseinrichtung (32) eingerichtet ist, das Brandbegrenzungselement (31) in Anlage an wenigstens einer Komponente (15, 16, 21, 22) des elektrifizierten Nutzfahrzeuganhängers (10) oder des elektrifizierten Nutzfahrzeugs (10') zu befestigen.

10. Elektrifizierter Nutzfahrzeuganhänger (10) oder elektrifiziertes Nutzfahrzeug (10') nach Anspruch 8 oder Anspruch 9, wobei die Befestigungseinrichtung (32) eingerichtet ist, das Brandbegrenzungselement (31) so zu befestigen, dass sich das Brandbegrenzungselement (31) teilweise oder vollständig um die Batterie (18) erstreckt.

11. Elektrifizierter Nutzfahrzeuganhänger (10) oder elektrifiziertes Nutzfahrzeug (10') nach einem der Ansprüche 8 bis 10, wobei die Befestigungseinrichtung (32) eingerichtet ist, das Brandbegrenzungselement (31) so zu befestigen, dass sich das Brandbegrenzungselement (31) teilweise oder vollständig um die Batterie (18) und den Ladeboden (21) erstreckt.

12. Elektrifizierter Nutzfahrzeuganhänger (10) oder elektrifiziertes Nutzfahrzeug (10') nach einem der vorhergehenden Ansprüche, wobei das Brandbegrenzungsmaterial (23; 35) ein flexibles Brandbegrenzungsmaterial (23; 35) aufweist.

13. Elektrifizierter Nutzfahrzeuganhänger (10) oder elektrifiziertes Nutzfahrzeug (10') nach Anspruch 12, wobei das flexible Brandbegrenzungsmaterial (23; 35) Siliziumoxid-Fasern und/oder Glasfasern mit einer Siliziumbeschichtung aufweist.

14. Elektrifizierter Nutzfahrzeuganhänger (10) oder elektrifiziertes Nutzfahrzeug (10') nach Anspruch 12 oder Anspruch 13, wobei das flexible Brandbegrenzungsmaterial (23; 35) ein Gewebe (43) und/oder ein Vlies (44) aufweist.

15. Elektrifizierter Nutzfahrzeuganhänger (10) oder elektrifiziertes Nutzfahrzeug (10') nach einem der vorhergehenden Ansprüche, wobei das Brandbegrenzungsmaterial (23; 35) ausgestaltet ist, Temperaturen von 1000 °C oder mehr, von 1200 °C oder mehr oder von 1300 °C oder mehr zerstörungsfrei standzuhalten.

16. Elektrifizierter Nutzfahrzeuganhänger (10) nach einem der vorhergehenden Ansprüche, wobei der elektrifizierte Nutzfahrzeuganhänger (10) als elektrifizierter Sattelauflieger (10) ausgestaltet ist.

17. Verfahren zum Erhöhen einer Betriebssicherheit eines elektrifizierten Nutzfahrzeuganhängers (10) oder eines oder elektrifizierten Nutzfahrzeugs (10'), der oder das einen Ladeboden (21), einen elektrischen Achsantrieb (12), eine Batterie (18) zum Versorgen des elektrischen Achsantriebs (12) mit Energie und eine Abstützeinrichtung (20) zum mechanischen Abstützen der Batterie (18) aufweist, wobei das Verfahren aufweist:
Anordnen einer Brandbegrenzungseinrichtung (23; 23, 31, 32), die ein Brandbegrenzungsmaterial (23; 35) aufweist, um eine Hemmung einer Flammenausbreitung und/oder einer Hitzeausbreitung von der Batterie (18) zu bewirken oder zu unterstützen.

18. Verfahren nach Anspruch 17, wobei der elektrifizierte Nutzfahrzeuganhänger (10) der elektrifizierte Nutzfahrzeuganhänger (10) nach einem der Ansprüche 1 bis 16 ist oder wobei das elektrifizierte Nutzfahrzeug das elektrifizierte Nutzfahrzeug (10') nach einem der Ansprüche 1 bis 16 ist.
